# EUROPÄISCHE PATENTSCHRIFT

(11) **EP 1 385 733 B1**
(45) Veröffentlichungstag und Bekanntmachung des Hinweises auf die Patenterteilung: **15.09.2004**
(21) Anmeldenummer: 02737828.0
(22) Anmeldetag: 02.05.2002
(51) Int. Cl.: B62D 25/24

(54) **VERSCHLUSSDECKEL**
SEALING COVER
BOUCHON DE FERMETURE

(30) Priorität: 04.05.2001 DE 20107612 U
(43) Veröffentlichungstag der Anmeldung: 04.02.2004
(73) Patentinhaber: TRW Automotive Electronics & Components GmbH & Co. KG, 78315 Radolfzell (DE)
(72) Erfinder: KRAUS, Willibald, 67269 Grünstadt (DE)
(74) Vertreter: Schieschke, Klaus, Dipl.-Ing.
(86) Internationale Anmeldenummer: PCT/DE2002/001594
(87) Internationale Veröffentlichungsnummer: WO 2002/090171

(56) Entgegenhaltungen:
- DE-C- 19 829 013
- US-A- 2 636 640
- US-A- 5 937 486
- US-B1- 6 360 779

## Beschreibung

Die Erfindung bezieht sich auf einen Verschlussdeckel aus Kunststoff, insbesondere zum Verschließen einer Öffnung in einem Träger, mit einem Grundkörper, an welchen sich ein umlaufender Bund anschließt, welcher in eine sich gegen eine Seite eines Trägers anlegende, elastische Dichtlippe übergeht, wobei der Bund an seinem Außenumfang einen Rastring aufweist, nach dem Oberbegriff des Ansprüchs 1.

Nächstkommender und gattungebildender Stand der Technik ist ein zum Abdichten einer Öffnung vorgesehener Verschlussstopfen mit einer Dichtlippe sowie einem ersten und einem zweiten Rastring (DE 198 29 013 Cl). Durch diese beiden Dichtlippen sollen verschieden große Öffnungen abgedichtet werden.

Weiterer Stand der Technik ist ein Verschlussdeckel, welcher nach Einsetzen in zwei Trägeröffnungen einer Gestaltsänderung unter Temperatureinfluss unterliegt (US 598 37 486 A). Darüber hinaus ist ein aus Blech bestehendes Verschlusselement bekannt (US 2 636 640 A), welches statt eines umlaufenden Rastrings mehrere Rastfinger aufweist.

Als Stand der Technik sind danüber hinaus zahlreiche Ausführungsformen von Verschlussdeckeln bekannt. Einer dieser bekannten Verschlussdeckel aus Kunststoff (DE 38 31 433 A1) ist so ausgebildet, dass der Rastring zwei sich gegen die einander gegenüberliegenden Flächen des Trägers im Bereich der Öffnung dicht anlegende Dichtflächen aufweist. Hierdurch wird eine formund kraftschlüssige Verbindung zwischen einer Öffnung eines Trägers und dem Verschlussdeckel hergestellt.

Andere bekannte Verschlussdeckel weisen Ringschultern auf, welche die Unterseite einer Trägerplatte beaufschlagen (DE-GM G88 02 422, DE-AS 1- 555 007).

Weiterhin sind zweiteilig ausgebildete Verschlussdeckel bekannt (DE 43 27 945 A1), welche aus einem Kunststoffdeckelteil und einem damit verbundenen Kunststoffabdichtteil bestehen. Alle diese bekannten Verschlussdeckel sind nur für ganz spezielle Anwendungsbereiche gedacht und außerdem nicht in der Lage, allen Temperatureinflüssen standzuhalten, wie sie beispielsweise im Bereich der Kraftfahrzeugindustrie bei der Bearbeitung einer Karosserie vorkommen.

Bislang war es erforderlich, in diesem speziellen Anwendungssektor zwei verschiedene Ausführungsformen von Verschlussdeckeln einzusetzen, nämlich einen Verschlussdeckel, welcher vor der Grundierung verwendet wird - hier müssen eine Formbeständigkeit bis über 185°C und ein wasserdichter Abschluss gewährleistet sein -, sowie ein weiterer Deckel, welcher nach der Montage eingesetzt wurde, bei welchem Temperaturbereiche zwischen 90° und 130°C beispielsweise beim Aufbringen von Decklack oder bei späterer Nachlackierung zu berücksichtigen waren.

Für alle vorgenannten Anwendungsbeispiele war es daher bisher erforderlich, verschiedene Verschlussdeckel einzusetzen, und zwar sowohl, um die unterschiedlichen Temperatureinflüsse zu berücksichtigen als auch zur Gewährleistung einer sicheren und wasserdichten Befestigung an den verschiedenen Trägeröffnungen (z.B. glatte Trägeröffnung oder mit Bund).

Entsprechend liegt der vorliegenden Erfindung die Aufgabe zu Grunde, einen verbesserten Verschlussdeckel der eingangs genannten Art zu schaffen, welcher für alle Bereiche, und zwar sowohl bezüglich der Temperatur als auch bezüglich der Gestaltung der Trägeröffnung, einsetzbar ist.

Diese Aufgabe wird erfindungsgemäß mit den Merkmalen in kennzeichnenden Teil des Ansprüche 1..

Durch diese kombinative Wirkung von Material und Formgestaltung wird ein Verschlussdeckel in einheitlicher Ausführungsform geschaffen, welcher für alle Applikationen einsetzbar ist. Es wird eine gute Lackhaftung sowie eine gute PVC-Haftung sowie eine gute Verschmelzung gewährleistet, wobei eine Temperaturbeständigkeit bis 185°C, ein wasserdichter Abschluss bei Raumtemperatur sowie eine einwandfreie Formbeständigkeit gegeben ist. Es liegt damit vorteilhafterweise eine einheitliche Ausführungsform für alle Temperaturanforderungen vor, und zwar unabhängig davon, wie die abzudichtende Öffnung in einem Träger gestaltet ist.

Nach der Erfindung ist zwischen dem zweiten Rastring und der Dichtlippe ein dritter Rastring am Außenumfang des Bundes angeordnet. Hierbei kann der dritte Rastring parallel zum zweiten Rastring verlaufen und gegen die Unterseite der Dichtlippe gerichtet sein. Alternativ besteht auch die Möglichkeit, dass der dritte Rastring gegen den zweiten Rastring gerichtet ist.

Der dritte Rastring kann entweder die gleiche Höhe wie der zweite Rastring aufweisen oder den zweiten Rastring höhenmäßig überragen.

Nach einer anderen Ausführungsform der Erfindung kann der dritte Rastring vorteilhafterweise in der Ausnehmung liegen, welche durch die umlaufende, elastische, gegen den ersten Rastring gerichtete Dichtlippe gebildet ist.

Weiterhin besteht die Möglichkeit, dass der erste Rastring den zweiten und den dritten Rastring überragt.

Die Erfindung wird nachfolgend anhand von in der Zeichnung dargestellten Ausführungsbeispielen näher beschrieben. In der Zeichnung zeigen:
- Fig.: 1-4 Ausgestaltungen des Verschlussdeckels, in Seitenansicht, teils geschnitten und in vergrößerter Darstellung;
- Fig. 5: eine andere Ausführungsmöglichkeit des Verschlussdeckels in Draufsicht;
- Fig 6a-c: verschiedene Einbauvarianten des Verschlüßdeckels mit einem Träger, geschnitten, in Seitenausicht.

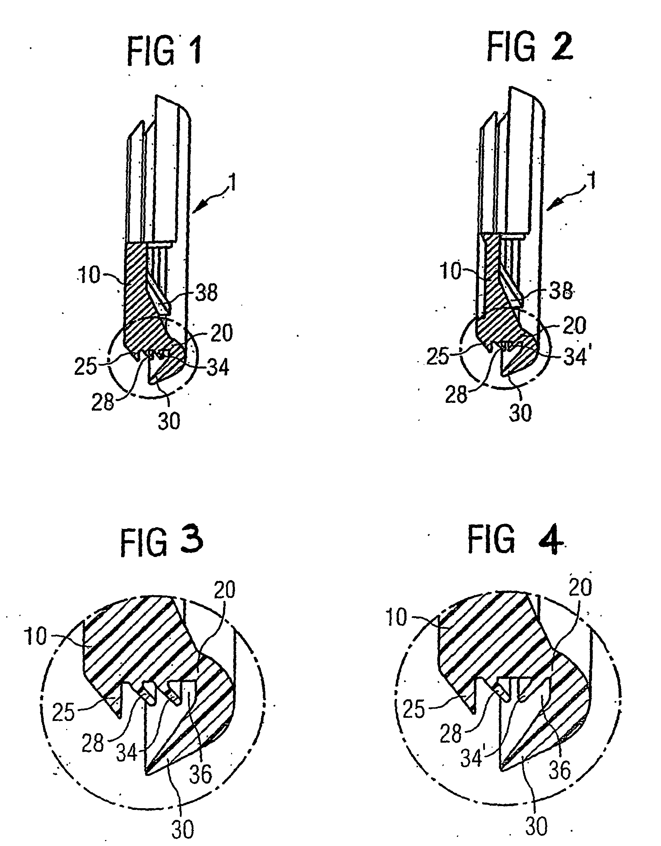

In Fig. 1 und 3 ist ein Verschlussdeckel 1 aus Kunststoff dargestellt, welcher insbesondere zum Verschließen einer Öffnung in einem, verschiedene Formen aufweisenden Träger dient. Dieser Verschlussdeckel 1 weist einen Grundkörper 10 auf, an welchen sich ein umlaufender Bund 20 anschließt. Der Bund 20 geht in eine gegen eine Seite des Trägers anlegende, elastische Dichtlippe 30 über und weist an seinem Außenumfang einen Rastring 25 auf.

Der einstückig ausgebildete Verschlussdeckel 1 besteht aus einem thermoplastischen Elastomer. Zwischen dem Rastring 25 nach Fig. 3 und 4 und der Dichtlippe 30 ist am Außenumfang des Bundes 20 ein zweiter Rastring 28 angeordnet. Dieser zweite Rastring 28 ist gegen die Unterseite der Dichtlippe 30 gerichtet.

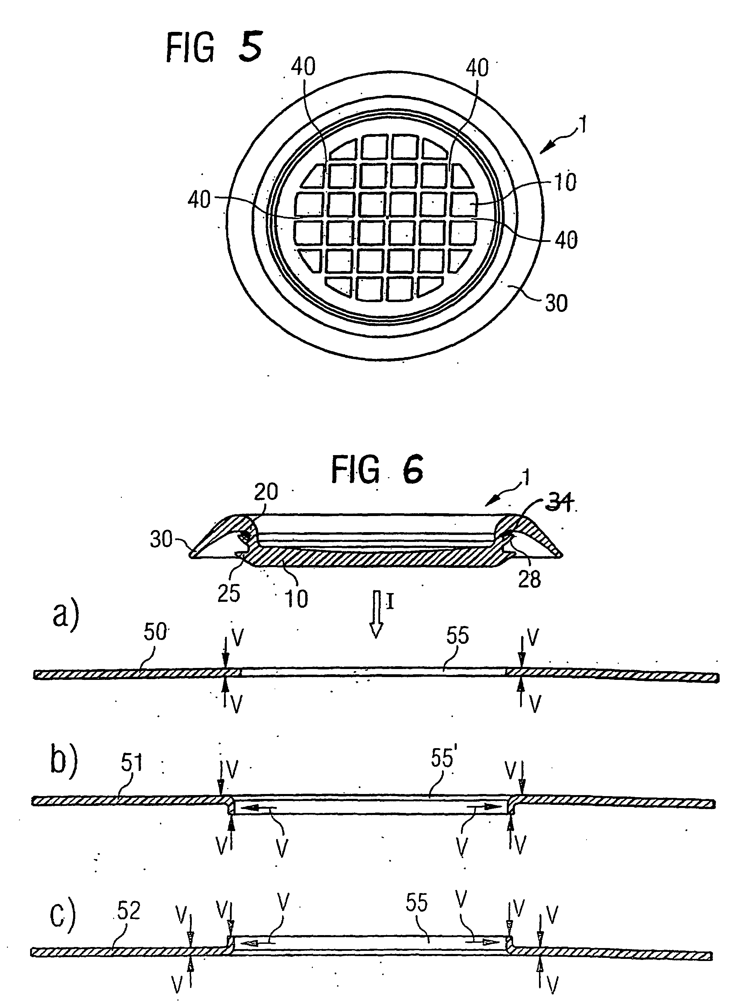

Insbesondere aus Fig. 1 und 5 geht hervor, dass der Grundkörper 10 im Bereich der Dichtlippe 30 mehrere Rippen 38 aufweist, welche einander diagonal gegenüberliegen können und beispielsweise Keilform besitzen. Diese Rippen 38 sind beispielsweise kürzer als der Innenumfang des Grundkörpers 10. Es wird dadurch eine formstabile Ausführung gewährleistet, welche auch dann ihre Form beibehält, wenn der erfindungsgemäße Verschlussdeckel mit einem beliebig gestalteten Träger verbunden ist.

Nach Fig. 1 bis 4 ist zwischen dem zweiten Rastring 28 und der Dichtlippe 30 ein dritter Rastring 34 bzw. 34' am Außenumfang des Bundes 20 angeordnet. Hierbei kann nach Fig. 1 und 3 der dritte Rastring 34 parallel zum zweiten Rastring 28 verlaufen und gegen die Unterseite der Dichtlippe 30 gerichtet sein.

Nach Fig. 2 bzw. 4 besteht auch die Möglichkeit, dass der dritte Rastring 34' gegen den zweiten Rastring 28 gerichtet ist.

Der dritte Rastring 34 bzw. 34' kann hierbei die gleiche Höhe wie der zweite Rastring 28 haben. Alternativ besteht auch die Möglichkeit, dass der dritte Rastring den zweiten Rastring 28 höhenmäßig überragt.

Insbesondere aus Fig. 3 und 4 geht hervor, dass bei beiden Ausführungsmöglichkeiten der dritte Rastring 34 bzw. 34' in der Ausnehmung 36 liegt, welche durch die umlaufende, elastische, gegen den ersten Rastring 25 gerichtete Dichtlippe 30 gebildet ist.

Bei der Ausführungsform nach Fig. 5 besteht die Möglichkeit, dass der Grundkörper 10 im Bereich der Dichtlippe 30 gitterförmig verlaufende Rippen 40 aufweist. Diese Gitter haben folgende Funktion: Bei hohen Temperaturen kann das Material des erfindungsgemäßen Verschlussdeckels schrumpfen, so dass eine wasserdichte Form nicht mehr gewährleistet ist. Durch die Bearbeitung der Karosserie sind nun diese Waben des Gitters 40 beispielsweise mit PVC gefüllt, wodurch ein Schrumpfungsprozess vermieden wird und der Verschlussdeckel insgesamt formstabil bleibt.

Bei allen dargestellten Ausführungsformen überragt der Bund 20 den Grundkörper 10 einseitig. Es besteht jedoch auch die Möglichkeit, dass dieser Bund gegenüber dem Grundkörper so angeordnet ist, dass der Bund den Grundkörper beidseitig überragt.

Fig.6 a-c stellt den Einbau des erfindungsgemäßen Verschlussdeckels 1 in verschiedenen Trägergestaltungen vor: Nach Fig. 6a ist dieser Träger 50 ein gerades Blech mit einer Öffnung 55. Hier liegen unter Temperatureinfluss Verschmelzungsbereiche v beidseitig der Trägeröffnung 55 vor, wobei der Pfeil I die Montagerichtung des erfindungsgemäßen Verschlussdeckels 1 definiert.

Diese Verschmelzungsbereiche ergeben sich aus der Dichtlippe 30 und den Rastringen 25, 28 bzw. 34.

Nach Fig. 6b liegt ein Kragenloch 55' in Montagerichtung vor, wobei sich diesmal drei Verschmelzungsbereiche v beidseitig des Kragenlochs ergeben, und zwar durch die Dichtlippe 30, den zweiten und/oder den dritten Rastring 28 und 34 bzw. 34' und den ersten Rastring 25.

Bei der Ausführungsform nach Fig. 6c, bei welcher der Träger 52 ein Kragenloch entgegen der Montagerichtung aufweist, liegen insgesamt vier Verschmelzungsbereiche v vor, d.h. durch die Dichtlippe 30, den ersten Rastring 25, den zweiten Rastring 28 und den dritten Rastring 34 bzw. 34'.

Die Verschmelzungsbereiche v ergeben sich alle aus dem Anliegen der Dichtlippe 30 des ersten Rastrings 25, des zweiten Rastrings 28 bzw. des dritten Rastrings 34 bzw. 34' oberhalb und unterhalb des Trägers 50 bzw. 51 bzw 52 sowie am Innenumfang des jeweiligen Kragenlochs, an welchem der jeweilige zweite Rastring 34 bzw. 34' anliegt und durch Temperatureinfluss eine Verschmelzung mit dem Träger eingeht.

Durch die spezielle Gestaltung des erfindungsgemäßen Verschlussdeckels liegt eine Formbeständigkeit über sämtliche Temperaturbereiche vor, wobei eine Temperaturbeständigkeit bis maximal 185°C gewährleistet ist und bei Raumtemperatur eine wasserdichte und formbeständige Verbindung mit dem Träger gegeben ist. Es ergibt sich damit ein Verschlussdeckel, welcher für sämtliche Applikationen einsetzbar ist und eine hohe Formbeständigkeit aufweist. Durch den erfindungsgemäßen Verschlussdeckel ist eine einwandfreie Abdeckung der sogenannten Schnittkante gewährleistet, wie sie sich im Bereich der Trägeröffnung 55 ergeben kann.

Erfindungsgemäß ergibt sich damit ein Verschlussdeckel, welcher einen sehr weiten Anwendungsbereich besitzt und auch in der Lage ist, sich an Deformierungen im Bereich der Trägeröffnung anzupassen. Hierbei kann der Verschlussdeckel rund, oval oder rechteckig gestaltet sein.

## Patentansprüche

1. Verschlussdeckel (1) aus Kunststoff, insbesondere zum Verschließen einer Öffnung (55) in einem Träger (50; 51; 52), mit einem Grundkörper (10), an welchem sich ein umlaufender Bund (20) anschließt, welcher in eine sich gegen eine Seite eines Trägers anlegende, elastische Dichtlippe (30) übergeht,
wobei der Bund (20) an seinem Außenumfang einen Rastring (25) aufweist und
wobei zwischen dem Rastring (25) und der Dichtlippe (30) am Außenumfang des Bundes (20) mindestens ein zweiter Rastring (28) angeordnet ist,
der zweite Rastring (28) gegen die Unterseite der Dichtlippe (30) gerichtet ist
**dadurch gekennzeichnet,**
**dass** der einstückig ausgebildete Verschlussdeckel (1) aus einem thermoplastischen Elastomer besteht und
**dass** zwischen dem zweiten Rastring (28) und der Dichtlippe (30) ein dritter Rastring (34; 34') am Außenumfang des Bundes (20) angeordnet ist.

2. Verschlussdeckel nach Anspruch 1, **dadurch gekennzeichnet, dass** der dritte Rastring (34) parallel zum zweiten Rastring (28) verläuft und gegen die untere Seite der Dichtlippe (30) gerichtet ist.

3. Verschlussdeckel nach Anspruch 1, **dadurch gekennzeichnet, dass** der dritte Rastring (34) gegen den zweiten Rastring (28) gerichtet ist.

4. Verschlussdeckel nach einem oder mehreren der vorhergehenden Ansprüche, **dadurch gekennzeichnet, dass** der dritte Rastring (34) die gleiche Höhe wie der zweite Rastring (28) hat.

5. Verschlussdeckel nach Anspruch 3, **dadurch gekennzeichnet, dass** der dritte Rastring den zweiten Rastring (28) höhenmäßig überragt.

6. Verschlussdeckel nach einem oder mehreren der vorhergehenden Ansprüche, **dadurch gekennzeichnet, dass** der dritte Rastring (34;34') in einer Ausnehmung liegt, welche durch die umlaufende, elastische, gegen den ersten Rastring (25) gerichtete Dichtlippe (30) gebildet ist.

7. Verschlussdeckel nach einem oder mehreren der vorhergehenden Ansprüche, **dadurch gekennzeichnet, dass** der Grundkörper (10) im Bereich der Dichtlippe (30) gitterförmig verlaufende Rippen (40) aufweist.

8. Verschlussdeckel nach einem oder mehreren der vorhergehenden Ansprüche, **dadurch gekennzeichnet, dass** der erste Rastring (25) den zweiten und dritten Rastring (28; 34) überragt.

## Claims

1. Closure cover (1) made of plastic, in particular for closing an opening (55) in a support (50; 51; 52), having a basic body (10) which is adjoined by an encircling collar (20), which merges into an elastic sealing lip (30) which positions itself against a side of a support,
the collar (20) having a latching ring (25) on its outer circumference, and
there being arranged between the latching ring (25) and the sealing lip (30), on the outer circumference of the collar (20), at least one second latching ring (28),
the second latching ring (28) being directed towards the underside of the sealing lip (30),
**characterized**
**in that** the closure cover (1), which is formed in one piece, consists of a thermoplastic elastomer, and
**in that** a third latching ring (34; 34') is arranged on the outer circumference of the collar (20), between the second latching ring (28) and the sealing lip (30).

2. Closure cover according to Claim 1, **characterized in that** the third latching ring (34) runs parallel to the second latching ring (28) and is directed towards the bottom side of the sealing lip (30).

3. Closure cover according to Claim 1, **characterized in that** the third latching ring (34) is directed towards the second latching ring (28).

4. Closure cover according to one or more of the preceding claims, **characterized in that** the third latching ring (34') is the same height as the second latching ring (28).

5. Closure cover according to Claim 3, **characterized in that** the third latching ring projects, heightwise, beyond the second latching ring (28).

6. Closure cover according to one or more of the preceding claims, **characterized in that** the third latching ring (34; 34') is located in a recess which is formed by the encircling, elastic sealing lip (30) directed towards the first latching ring (25).

7. Closure cover according to one or more of the preceding claims, **characterized in that** the basic body (10) has ribs (40) running in a grid-like manner in the region of the sealing lip (30).

8. Closure cover according to one or more of the preceding claims, **characterized in that** the first latching ring (25) projects beyond the second and third latching rings (28; 34).

## Revendications

1. Bouchon de fermeture (1) en plastique, en particulier pour l'obturation d'une ouverture (55) dans un support (50 ;51 ;52), avec un corps de base (10), sur lequel se raccorde un collet (20) qui aboutit à une lèvre d'étanchéité élastique (30), s'appuyant contre un côté du support,
dans lequel le collet (20) présente une bague d'arrêt (25) sur sa périphérie extérieure
et
dans lequel entre la bague d'arrêt (25) et la lèvre d'étanchéité (30) sur la périphérie extérieure du collet (20) est disposée au moins une seconde bague d'étanchéité (28),
la seconde bague d'étanchéité (28) est dirigée contre le côté inférieure de la lèvre d'étanchéité (30)
**caractérisé en ce que**
le bouchon de fermeture (1) configuré d'un seul tenant consiste en un élastomère thermoplastique et
**en ce qu'**entre la seconde bague d'arrêt (28) et la lèvre d'étanchéité (30) est agencée un troisième bague d'étanchéité (34 ;34') sur la périphérie extérieure du collet (20).

2. Bouchon de fermeture selon la revendication 1, **caractérisé en ce que** la troisième bague d'arrêt (34) s'étend parallèlement à une seconde bague d'arrêt (28) et est dirigée contre le côté inférieur de la lèvre d'étanchéité (30).

3. Bouchon de fermeture selon la revendication 1, **caractérisé en ce que** la troisième bague d'arrêt (34) est dirigée contre la seconde bague d'arrêt (28).

4. Bouchon de fermeture selon une ou plusieurs des revendications précédentes, **caractérisé en ce que** la troisième bague d'arrêt (34') a la même hauteur que la seconde bague d'arrêt (28).

5. Bouchon de fermeture selon la revendication 3, **caractérisé en ce que** la troisième bague d'arrêt surplombe d'une certaine hauteur la seconde bague d'arrêt (28).

6. Bouchon de fermeture selon l'une ou plusieurs des revendications précédentes, **caractérisé en ce que** la troisième bague d'arrêt (34 ;34') se situe dans un évidement, qui est formé par la lèvre d'étanchéité (30) circulaire, élastique, dirigée vers la première bague d'arrêt (25).

7. Bouchon de fermeture selon une ou plusieurs des revendications précédentes, **caractérisé en ce que** le corps de base (10) présente des nervures (40) s'étendant en forme de treillis dans la zone de la lèvre d'étanchéité (30).

8. Bouchon d'étanchéité selon l'une ou plusieurs des revendications précédentes, **caractérisé en ce que** la première bague d'arrêt (25) surplombe la seconde et la troisième bagues d'arrêt (28 ; 34).
